# EUROPEAN PATENT APPLICATION

(11) **EP 4 589 585 A1**
(43) Date of publication of application: **23.07.2025**
(21) Application number: 22958752.2
(22) Date of filing: 13.09.2022
(51) Int. Cl.: G10L 13/02

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: SHINTAKU, Takayuki, Tokyo 112-0002 (JP); KAWAUCHI, Hiroto, Tokyo 112-0002 (JP)
(74) Representative: Hoffmann Eitle
(86) International application number: PCT/JP2022/034288
(87) International publication number: WO 2024/057420

(57) **Abstract**

An information processing apparatus (100a) according to the present disclosure includes an acquisition unit (132) that acquirers content information to be output in a moving object, and an output control unit (133a) that outputs the content information when a type of the content information meets an output condition that corresponds to a current situation of a passenger in the moving object. Further, when the content information is not output because the output condition is not met, the output control unit (133a) outputs call information for obtaining a permission for output of the content information from the passenger of the moving object in an allowable range in which output of the content information is allowed.

## Description

### Field

The present disclosure relates to an information processing apparatus, an information processing method, and an information processing program.

### Background

Conventionally, a technology for providing information by voice without giving a bad impression to a user has been proposed.

### Citation List

### Patent Literature

Japanese Unexamined Patent Application Publication No. 2017-67852

### Summary

### Technical Problem

However, in the conventional technology as described above, voice information is provided after a lapse of a waiting time since detection of termination of a conversation of a user in a vehicle; therefore, the conversation of the user is not interrupted, but information for which a presentation time limit has expired during the waiting time is not presented. Therefore, in the conventional technology as described above, there is room for improvement in providing information that is useful for the user.

The present disclosure has been conceived in view of the foregoing situation, and provides an information processing apparatus, an information processing method, and an information processing program capable of providing information that is useful for a user.

### Solution to Problem

An information processing apparatus according to claim 1 includes: an acquisition unit that acquirers content information to be output in a moving object; and an output control unit that outputs the content information when a type of the content information meets an output condition that corresponds to a current situation of a passenger in the moving object, wherein when the output control unit does not output the content information because the output condition is not met, the output control unit outputs call information for obtaining a permission for output of the content information from the passenger of the moving object in an allowable range in which output of the content information is allowed.

An information processing method according to claim 9 is executed by an information processing apparatus, the information processing method comprising: an acquisition step of acquiring content information to be output in a moving object; and an output control step of outputting the content information when a type of the content information meets an output condition that corresponds to a current situation of a passenger in the moving object, wherein the output control step includes outputting, when the content information is not output because the output condition is not met, call information for obtaining a permission for output of the content information from the passenger of the moving object in an allowable range in which output of the content information is allowed.

An information processing program according to claim 10 is executed by an information processing program executed by an information processing apparatus, the information processing program comprising: an acquisition step of acquiring content information to be output in a moving object; and an output control step of outputting the content information when a type of the content information meets an output condition that corresponds to a current situation of a passenger in the moving object, wherein the output control step includes outputting, when the content information is not output because the output condition is not met, call information for obtaining a permission for output of the content information from the passenger of the moving object in an allowable range in which output of the content information is allowed.

### Brief Description of Drawings

FIG. 1 is a diagram illustrating an example of a system according to one embodiment.
FIG. 2 is a diagram illustrating a configuration example of each of apparatuses according to the first embodiment.
FIG. 3 is a diagram illustrating an example of an output determination table according to one embodiment.
FIG. 4 is a diagram illustrating an example of a content information storage unit according to one embodiment.
FIG. 5 is a flowchart illustrating the flow of an output control process according to the first embodiment.
FIG. 6 is a diagram illustrating an example of a content information storage unit according to a modification of the first embodiment.
FIG. 7 is a diagram illustrating a configuration example of each of apparatuses according to a second embodiment.
FIG. 8 is a flowchart illustrating the flow of an output control process for outputting an output-pending content.
FIG. 9 is a flowchart illustrating the flow of an update process for updating an output condition.
FIG. 10 is a diagram illustrating a configuration example of each of apparatuses according to a third embodiment.
FIG. 11 is a flowchart illustrating the flow of an output control process according to the third embodiment.
FIG. 12 is a hardware configuration diagram illustrating an example of a computer that implements an on-vehicle apparatus 100.

### Description of Embodiments

Embodiments of the present disclosure will be described in detail below based on the drawings. An information processing apparatus, an information processing method, and an information processing program according to the present disclosure are not limited by the embodiments below. In addition, in the embodiments described below, the same components are denoted by the same reference symbols, and repeated explanation will be omitted.

### Overview of embodiments

### 1. System configuration

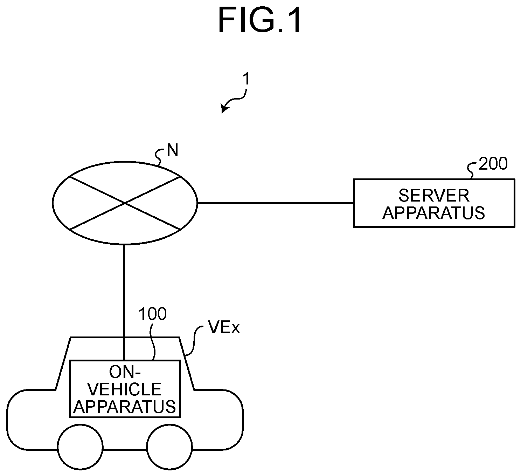

A configuration of a system according to one embodiment will be described below with reference to FIG. 1. FIG. 1 is a diagram illustrating an example of the system according to one embodiment. FIG. 1 illustrates a system 1 as one example of the system according to one embodiment. Various output control processes according to one embodiment may be implemented by the system 1.

As illustrated in FIG. 1, the system 1 includes an on-vehicle apparatus 100 and a server apparatus 200. Further, the on-vehicle apparatus 100 and the server apparatus 200 may be communicably connected to each other in a wired or wireless manner. Furthermore, the system 1 illustrated in FIG. 1 may include an arbitrary number of the on-vehicle apparatuses 100 and an arbitrary number of the server apparatuses 200.

### 2. Overview of each of apparatuses included in system

### On-vehicle apparatus 100

The on-vehicle apparatus 100 is one example of an information processing apparatus according to one embodiment of the present disclosure, and is a central apparatus that is responsible for an output control process according to one embodiment. As illustrated in FIG. 1, the on-vehicle apparatus 100 may be a dedicated navigation device that is built in or mounted on a vehicle VEx.

For example, the on-vehicle apparatus 100 may include a navigation device and a recording device. As one example, the on-vehicle apparatus 100 may be a complex apparatus in which the navigation device and the recording device that are independent of each other are communicably connected to each other. As another example, the on-vehicle apparatus 100 may be a single apparatus that includes a navigation function and a recording function.

Furthermore, the on-vehicle apparatus 100 may include various kinds of sensors. For example, the on-vehicle apparatus 100 may include various kinds of sensors, such as a camera, an acceleration sensor, a gyro sensor, a Global Positioning System (GPS) sensor, and an atmospheric pressure sensor. In view of the above, the on-vehicle apparatus 100 may have a function to provide a dialog or information for supporting driving of a user (for example, a passenger of the vehicle VEx) based on sensor information that is acquired by various kinds of sensors.

Moreover, the on-vehicle apparatus 100 is allowed to use sensor information that is detected by a sensor that is included, as a safe driving system, in the vehicle VEx, in addition to the sensor that is included in the subject apparatus.

Furthermore, the user is able to introduce predetermined application software, in a mobile terminal device (for example, a smartphone, a tablet terminal, a notebook personal computer (PC), a portable digital assistant (PDA), or the like) that is used on a daily basis, and cause the mobile terminal device to operate in the same manner as the on-vehicle apparatus 100.

An overview of an output control process that is performed by the on-vehicle apparatus 100 will be described below. For example, the on-vehicle apparatus 100 outputs content information when an output condition that corresponds to a current situation of a passenger CWx of the vehicle VEx is met.

For example, the on-vehicle apparatus 100 identifies a situation inside the vehicle VEx, that is, the current situation of the passenger CWx based on voice information that is collected by a microphone, an image that is captured by a camera, a behavior of the vehicle VEx that is detected by a sensor, an attribute of a road on which the vehicle VEx is traveling and which is detected by a sensor, or the like. Further, the on-vehicle apparatus 100 applies a set of the identified situation of the passenger CWx and a type of content information that is provided by the server apparatus 200 to an output determination table (to be described later), and determines whether or not it is preferable to refrain from outputting the content information.

For example, when determining that it is not needed to refrain from outputting the content information (when the output condition is met), the on-vehicle apparatus 100 outputs the content information by voice. At this time, the on-vehicle apparatus 100 may display an image that indicates the content information, in addition to the voice. In contrast, when determining that it is needed to refrain from outputting the content information (when the output condition is not met), the on-vehicle apparatus 100 suspends output of the content information.

Example of a situation in which it is preferable to refrain from outputting the content information include a situation in which the passenger CWx is driving with a large operational load, a situation in which the passenger CWx is having conversations, a situation in which the passenger CWx is having a phone call, and a situation in which the passenger CWx is concentrated on listening favorite music.

Furthermore, the on-vehicle apparatus 100 performs various kinds of output control as described below on the premise of the output control process as described above.

In a first embodiment, the on-vehicle apparatus 100 (an on-vehicle apparatus 100a to be described later), when the output condition is not met and the content information is not output, give a call to the passenger CWx in an allowable range in which output of the content information is allowed, and controls output of the content information in accordance with a reply that is given by the passenger CWx in response to the call.

Call information that is used by the on-vehicle apparatus 100 to give a call includes a plurality of meanings depending on purposes. Specifically, the call information is output to obtain a permission for output of the content information or to attract attention to the content information, and includes appropriate expressions depending on the purposes. The call information may be output in various output modes including video output, indicator lighting, or the like as long as the call information fits the purposes; however, in typical, it is assumed that the call information is output by voice. Furthermore, although details will be described later, in some cases, the on-vehicle apparatus 100 may output overview information that indicates an overview of the content information, in addition to the call information.

In a second embodiment, the on-vehicle apparatus 100 (an on-vehicle apparatus 100b to be described later), when an allowable range is exceeded in a state in which an output condition is not met and content information that has not been output in the allowable range is present, and if the output condition is met, outputs again the content information that has not been output. In this case, the on-vehicle apparatus 100 also outputs a reason that the content information has not been output, that is, a reason that the output of the content information is suspended. Furthermore, in the second embodiment, the on-vehicle apparatus 100 performs a process of updating a content of the output condition in accordance with a reply that is given by the passenger CWx in response to the content information that is output again.

In a third embodiment, the on-vehicle apparatus 100 (an on-vehicle apparatus 100c to be described later) determines whether or not a vehicle VEx is moving outside a living sphere of the passenger CWx, and when determining that the vehicle VEx is moving outside the living sphere, outputs content information of a predetermined type (for example, content information for recommending a spot that is located outside the living sphere) in the allowable range even when the output condition is not met.

Meanwhile, the allowable range described herein may be any of a geographical range, a temporal range, a travel distance range of the vehicle VEx, a passing area range of the vehicle VEx, a vehicle velocity range, and the like in which the content information is to be output. Furthermore, a limit value that indicates a limit (boundary) of the allowable range may be regarded as an output deadline for the content information.

For example, in the case of information in which the allowable range indicates a geographical range, the limit value corresponds to an area limit in the geographical range. Furthermore, in the case of information in which the allowable range indicates a temporal range, the limit value corresponds to a time limit in the temporal range.

Moreover, the allowable range is added in association with each piece of the content information that is provided by the server apparatus 200.

### Server apparatus 200

The server apparatus 200 records, as user information, attribute information (for example, gender, an age, a hobby, a preference, or the like) on the user or various kinds of history information (for example, a visiting place history, a search history, or the like), and identifies the content information to be output in the vehicle VEx by voice based on the user information. Furthermore, the server apparatus 200 transmits the identified content information to the on-vehicle apparatus 100 so as to output the content information. For example, the server apparatus 200 may provide the content information that is added with information that indicates the allowable range.

Examples of the content information that is provided by the server apparatus 200 include recommend information (for example, information on various kinds of spots that are located nearby), news, weather information, e-mail information (for example, reception, a sender, a title, information on text, or the like), a schedule, route guide information, and traffic information (for example, information on a traffic jam, road closure, or the like.

### First Embodiment

### 1. Functional configuration of on-vehicle apparatus

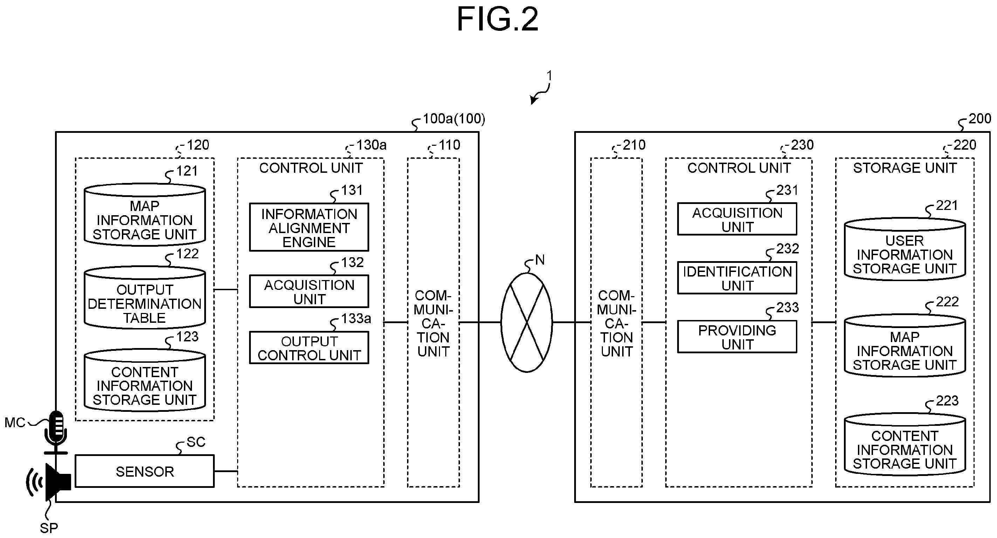

A first embodiment will be described below. FIG. 2 is a diagram illustrating a configuration example of each of apparatuses according to the first embodiment. FIG. 2 illustrates a configuration example of the on-vehicle apparatus 100a according to the first embodiment and a configuration example of the server apparatus 200 according to one embodiment. First, the configuration example of the on-vehicle apparatus 100a will be described.

As illustrated in FIG. 2, the on-vehicle apparatus 100a according to the first embodiment includes a microphone MC, a speaker SP, a sensor SC, a communication unit 110, a storage unit 120, and a control unit 130a.

### Microphone MC

The microphone MC is a sound collector that collects sound generated in the vehicle VEx. For example, the microphone MC collects sound of a spoken voice that is spoken by the passenger CWx in the vehicle VEx.

### Speaker SP

The speaker SP corresponds to an output device that outputs various kinds of information by voice. For example, the speaker SP outputs the content information in accordance with output control that is performed by the control unit 130a.

### Sensor SC

The sensor SC detects various kinds of information on the vehicle VEx and identifies a situation of the vehicle VEx based on the detected information. For example, the sensor SC detects a voice or a state in the vehicle VEx, a behavior of the vehicle VEx, or the like, and identifies a situation of the vehicle VEx. For example, the sensor SC identifies a current situation of the passenger CWx in the vehicle VEx. Further, the sensor SC outputs situation information that indicates the identified situation to an output control unit 133a.

In view of the above, the sensor SC may be various kinds of sensors, such as a microphone, a camera, an acceleration sensor, a gyro sensor, a Global Positioning Sensor (GPS) sensor, or an atmospheric pressure sensor, for example.

### Communication unit 110

The communication unit 110 is implemented by, for example, a Network Interface Card (NIC) or the like. Further, the communication unit 110 is connected to a network N in a wired or wireless manner, and transmits and receives information to and from, for example, the server apparatus 200.

### Storage unit 120

The storage unit 120 is implemented by, for example, a semiconductor memory device, such as a Random Access Memory (RAM) or a flash memory, or a storage device, such as an optical disk. The storage unit 120 may store therein, for example, data of a program related to an output control process according to one embodiment. Further, in the example illustrated in FIG. 2, the storage unit 120 includes a map information storage unit 121, an output determination table 122, and a content information storage unit 123.

### Map information storage unit 121

The map information storage unit 121 stores therein map information that corresponds to an area to which a current location CPTx of the vehicle VEx belongs. For example, the on-vehicle apparatus 100a transmits current location information on the vehicle VEx to the server apparatus 200, receives the map information that corresponds to the area to which the current location CPTx belongs from the server apparatus 200, and stores the map information in the map information storage unit 121. Further, the on-vehicle apparatus 100a provides a navigation service based on the map information.

### Output determination table 122

The output determination table 122 stores therein a determination table for determining whether or not a current situation SAy of the passenger CWx in the vehicle VEx is a situation in which it is preferable to refrain from outputting content information by voice. The output determination table 122 defines an output condition for the content information based on a relationship between the situation SAy of the passenger CWx and a type of the content information.

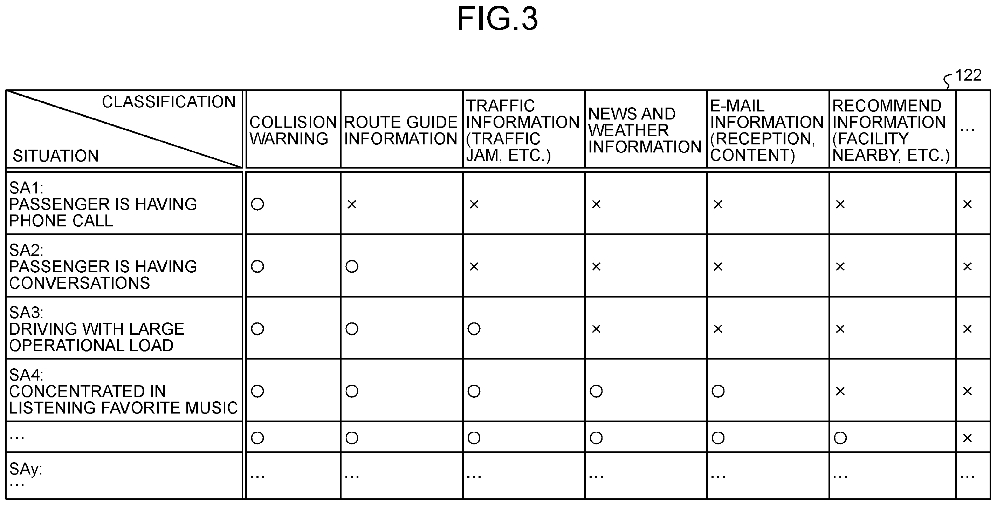

FIG. 3 illustrates an example of the output determination table 122 according to one embodiment. The output determination table 122 is used independently of the output control process according to the first embodiment.

In the example illustrated in FIG. 3, the output determination table 122 includes, as examples of the type of the content information, a "collision warning", "route guide information", "traffic information", "news and weather information", "e-mail information", "recommend information", and the like. This example indicates that the server apparatus 200 may provide content information that belongs to categories of the "collision warning", the "route guide information", the "traffic information", the "news and weather information", the "e-mail information", the "recommend information", and the like.

Furthermore, in the example illustrated in FIG. 3, the output determination table 122 indicates, as examples of the situation SAy in which it is preferable to refrain from outputting the content information, "passenger is having phone call" (a situation SA1), "passenger is having conversations" (a situation SA2), "passenger is driving with large operational load " (a situation SA3), "passenger is concentrated on listening favorite music" (situation SA4), and the like.

The output condition will be described in detail below by taking the situation SA2 as an example. In the example illustrated in FIG. 3, "∘" is associated with a combination of the situation SA2 of "passenger is having conversations" and a type of the content information of the "collision warning". This example indicates that a condition is set such that even when the passenger CWx "is having conversations" in the vehicle VEx, the content information that belongs to the "collision warning" is to be output.

Specifically, information that is defined by the combination of the situation SA2 of "passenger is having conversations" and the type of the content information of the "collision warning" ("O" in the example in FIG. 3) is an output condition that corresponds to the combination. Therefore, if the "passenger is having conversations" in the state in which content information that belongs to the "collision warning" is present as the content information to be output, the on-vehicle apparatus 100 is able to determine that the output condition for the type of the "collision warning" is met. In other words, the "passenger is having conversations" in the state in which content information that belongs to the "collision warning" is present as the content information to be output, the on-vehicle apparatus 100 determines that it is not needed to refrain from output.

Furthermore, in the example illustrated in FIG. 3, "∘" is associated with a combination of the situation SA2 of the "passenger is having conversations" and the type of the content information of the "route guide information". This example indicates that a condition is set such that even when the passenger CWx "is having conversations" in the vehicle VEx, the content information that belongs to the "route guide information" is to be output.

Specifically, information that is defined by the combination of the situation SA2 of "passenger is having conversations" and the type of the content information of the "route guide information" ("O" in the example in FIG. 3) is an output condition that corresponds to the combination. Therefore, if the "passenger is having conversations" in the state in which content information that belongs to the "route guide information" is present as the content information to be output, the on-vehicle apparatus 100 is able to determine that the output condition for the type of the "route guide information" is met. In other words, if the "passenger is having conversations" in the state in which content information that belongs to the "route guide information" is present as the content information to be output, the on-vehicle apparatus 100 determines that it is not needed to refrain from output.

Moreover, in the example illustrated in FIG. 3, " ×" is associated with a combination of the situation SA2 of the "passenger is having conversations" and the type of the content information of the "recommend information". This example indicates that a condition is set such that when the passenger CWx "is having conversations" in the vehicle VEx, the content information that belongs to the "recommend information" is not to be output.

Specifically, information that is defined by the combination of the situation SA2 of "passenger is having conversations" and the type of the content information of the "recommend information" ("×" in the example in FIG. 3) is an output condition that corresponds to the combination. Therefore, if the "passenger is having conversations" in the state in which content information that belongs to "recommend information" is present as the content information to be output, the on-vehicle apparatus 100 is able to determine that the output condition for the type of the "recommend information" is not met. In other words, if the "passenger is having conversations" in the state in which content information that belongs to "recommend information" is present as the content information to be output, the on-vehicle apparatus 100 determines that it is needed to refrain from output.

### Content information storage unit 123

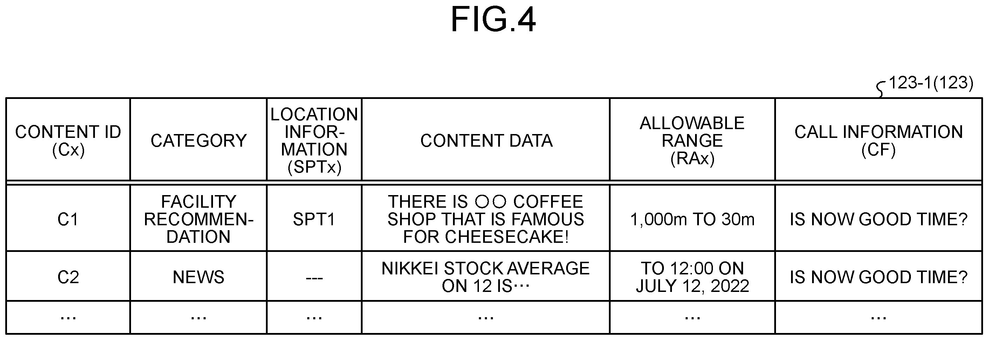

The content information storage unit 123 stores therein content information Cx that is provided from the server apparatus 200. Here, FIG. 4 illustrates an example of the content information storage unit 123 according to one embodiment. FIG. 4 illustrates a content information storage unit 123-1 as one example of the content information storage unit 123. In the example illustrated in FIG. 4, the content information storage unit 123-1 includes items, such as a "content ID" (Cx), a "category", "location information" (SPTx), "content data", an "allowable range" (RAx), and "call information" (CF).

The "content ID" is identification information for identifying content information. The "category" is information that indicates a type of content information. The "location information" is information that indicates a location where a spot that is a target in the content information is located. The "content data" is data that is a substance of the content information. It is preferable that the "content data" is, for example, text data, as the data that serves as a basis for outputting voice.

The "allowable range" is information that indicates a range in which output of the content information is allowed, and may be information that indicates any of a geographical range, a temporal range, a travel distance range of the vehicle VEx, a passing area range of the vehicle VEx, and a velocity range of the vehicle. Further, the "allowable range" is set for each content information; however, it may be possible to set a plurality of "allowable ranges" for each piece of content information.

The "call information" is information that is used to call the passenger CWx in the vehicle VEx, and may include various kinds of data that includes text data indicating a content of asking for permission for output of content information or a content of attracting attention to content information. The "call information" may be provided by the server apparatus 200 together with the content information. Therefore, the server apparatus 200 may automatically generate call information that corresponds to content information or call information that is manually generated for each piece of content information may be submitted to the server apparatus 200.

FIG. 4 illustrates an example in which the content ID of "C1", the category of "facility recommendation", the location information of "SPT1", and content data of "there is ∘∘ coffee shop that is famous for cheesecake!", the allowable range of "1,000 meters (m) to 30 m", and the call information of "Is now good time?" are associated with one another.

This example is an example in which the server apparatus 200 provides content information C1 that belongs to the category of "facility recommendation" in accordance with the content of "there is ∘∘ coffee shop that is famous for cheesecake!", and the on-vehicle apparatus 100a stores the content information C1 in the content information storage unit 123.

Furthermore, this example indicates that the facility (∘∘ coffee shop) that is recommended by the content information C1 is located in the location of "SPT1". Moreover, output of the content information C1 is permitted while the vehicle VEx is traveling within a range from "1,000 m" short of the location "SPT1" to "30 m" short of the location "SPT1".

### Control unit 130a

Referring back to FIG. 2, the control unit 130a is implemented by causing a Central Processing Unit (CPU), a Micro Processing Unit (MPU), or the like to execute various kinds of program (for example, the information processing program according to one embodiment) that are stored in an internal storage device of the on-vehicle apparatus 100a by using a RAM as a work area. Further, the control unit 130a may be implemented by, for example, an integrated circuit, such as an Application Specific Integrated Circuit (ASIC) or a Field Programmable Gate Array (FPGA).

As illustrated in FIG. 2, the control unit 130a includes an information alignment engine 131, an acquisition unit 132, and the output control unit 133a, and implements or executes functions and operation of information processing to be described below. Meanwhile, an internal configuration of the control unit 130a is not limited to the configuration illustrated in FIG. 2, and a different configuration may be adopted as long as it is possible to perform the information processing to be described below. Further, a connection relationship among the processing units that are included in the control unit 130a is not limited to the connection relationship as illustrated in FIG. 2, and it may be possible to adopt a different connection relationship.

### Information alignment engine 131

For example, the information alignment engine 131 estimates a traveling situation of the vehicle VEx from sensor information on traveling of the vehicle VEx, and calculates, based on an estimation result, priorities of output of a plurality of pieces of content information that are scheduled to be output. Further, the information alignment engine 131 determines an output order of the plurality of pieces of content information based on the calculated priorities.

For example, when overlap of the allowable range between pieces of the content information is detected, the information alignment engine 131 may determine the output order based on the traveling situation of the vehicle VEx in a range that corresponds to the detected overlap. For example, when overlap is detected, the information alignment engine 131 calculates a travel distance of the vehicle VEx in accordance with a replay time of the content information based on a traveling speed of the vehicle VEx in the range that corresponds to the detected overlap at a predetermined timing that is estimated from the sensor information and based on a replay time of each piece of content information that is to be output in the range that corresponds to the detected overlap. Further, the information alignment engine 131 may determine the output order based on the calculated distance and a relationship of the overlap.

More specifically, the information alignment engine 131 extracts, based on the distance and the relationship, a combination of a plurality of pieces of content information such that the plurality of pieces of content information can be output without interference at the predetermined timing from among a plurality of pieces of content information, and determines an output order for the extracted combination. For example, the information alignment engine 131 may perform control of extracting an appropriate combination from the plurality of pieces of content information by further using the priorities that are calculated for the respective pieces of content information, determining an output order corresponding to the priorities for the extracted combination, and causing the speaker SP to output the content information in accordance with the output order.

### Acquisition unit 132

The acquisition unit 132 acquires the content information Cx to be output in the vehicle VEx. For example, the content information Cx is provided in advance from the server apparatus 200 at a certain timing before arriving at the allowable range, in a state in which information that indicates the allowable range is added. In other words, the content information Cx is provided from the server apparatus 200 in a scheduled manner based on the allowable range. The acquisition unit 132 acquires the content information Cx that is provided as described above. Further, the acquisition unit 132 stores the acquired content information Cx in the content information storage unit 123.

### Output control unit 133a

The output control unit 133a, when the acquisition unit 132 acquires the content information Cx, acquires situation information that indicates a current situation SAy of the passenger CWx. The situation information may be provided by the sensor SC. Further, the output control unit 133a compares a combination of the situation SAy of the passenger CWx and a type of the content information Cx with the output determination table 122, and determines whether or not the output condition is met. In other words, the output control unit 133a determines whether or not the situation SAy of the passenger CWx is a situation in which it is needed to refrain from outputting the content information Cx.

In the first embodiment, when the output condition is not met and the content information Cx is not output, the output control unit 133a outputs call information CF for obtaining, from the passenger CWx, a permission for output of the content information Cx in the allowable range RAx in which output of the content information Cx is allowed.

The output control unit 133a determines whether or not a tolerance value that is left until a tolerance limit that is a limit value of the allowable range RAx at a current time point is equal to or larger than a first threshold. Further, when the tolerance value is equal to or larger than the first threshold (in other words, when it is determined that there is plenty of time until the deadline), the output control unit 133a does not output the call information CF, but may re-determine whether or not the output condition is met. When re-determination is performed as described above, the latest situation information at this time point is used.

Here, when an allowable range RAx is a temporal range, the tolerance value can be regarded as a grace period that is left until a time limit that is the limit value of the allowable range RAx at the current time point. In this case, the output control unit 133a determines whether or not the grace period is equal to or larger than the first threshold.

In contrast, when the allowable range RAx is a geographical range, the tolerance value can be regarded as a grace distance that is left until an area limit that is the limit value of the allowable range RAx at the current time point. In this case, the output control unit 133a determines whether or not the grace distance is equal to or larger than the first threshold.

Meanwhile, specific examples of the tolerance value and a determination process based on a comparison between the tolerance value and the first threshold have been described above, and the same applies to other thresholds (for example, a second threshold) to be described later.

Furthermore, when determining that the tolerance value becomes smaller than the first threshold in the state in which the output condition is not met, the output control unit 133a outputs the call information CF. In this case, when the passenger CWx does not permit output of the content information Cx in response to the call information CF, the output control unit 133a suspends output of the content information Cx, and re-determines whether or not the output condition is met. When re-determination is performed as described above, the latest situation information at this time point is used.

Further, while the output condition is not met and the passenger CWx does not permit output of the content information Cx in response to the call information CF, the output control unit 133a outputs the call information CF at a predetermined timing that corresponds to a decrease of the tolerance value. For example, the output control unit 133a determines whether or not the tolerance value becomes smaller than a second threshold that is lower than the first threshold, and when determining that the tolerance value becomes smaller than the second threshold, outputs the call information CF again.

In this manner, it may be possible to set, in association with the allowable range RAx, a plurality of thresholds for a plurality of stages so as to approach the limit value. With this configuration, the output control unit 133a determines whether or not the tolerance value is equal to or larger than a threshold by using a new threshold that corresponds to the number of outputs of the call information CF and the current tolerance value.

When the output condition is met or when the passenger CWx permits output of the content information Cx in response to the call information CF, the output control unit 133a determines whether or not the allowable range is met. Further, when determining that the allowable range is met, the output control unit 133a outputs the content information Cx.

### 2. Functional configuration of server apparatus

A configuration example of the server apparatus 200 will be described below with reference to FIG. 2. The configuration of the server apparatus 200 may be the same among all of the embodiments. As illustrated in FIG. 2, the server apparatus 200 includes a communication unit 210, a storage unit 220, and a control unit 230.

### Communication unit 210

A communication unit 210 is implemented by, for example, an NIC or the like. Further, the communication unit 210 is connected to the network N in a wired or wireless manner, and transmits and receives information to and from, for example, the on-vehicle apparatus 100.

### Storage unit 220

The storage unit 220 is implemented by, for example, a semiconductor memory device, such as a RAM or a flash memory, or a storage device, such as an optical disk. The storage unit 220 may include a user information storage unit 221, a map information storage unit 222, and a content information storage unit 223.

### User information storage unit 221

The user information storage unit 221 stores therein, as the user information, attribute information (for example, gender, an age, a hobby, a preference, or the like) on the user or various kinds of history information (for example, a visiting place history, a search history, or the like). For example, the server apparatus 200 may acquire the user information via the on-vehicle apparatus 100 or a part of the user information may be registered by a user him/herself.

### Map information storage unit 222

The map information storage unit 222 stores therein map information that covers road link information on the whole country. The map information may be updated periodically.

### Content information storage unit 223

The content information storage unit 223 stores therein candidate content information that is to be provided to the on-vehicle apparatus 100a. In some cases, the content information may be input from an external server apparatus. Further, in some cases, the server apparatus 200 may generate the content information based on the user information.

### Control unit 230

The control unit 230 is implemented by causing a CPU, an MPU, or the like to execute various kinds of program that are stored in an internal storage device of the server apparatus 200 by using a RAM as a work area. Further, the control unit 230 may be implemented by, for example, an integrated circuit, such as an ASIC or an FPGA.

As illustrated in FIG. 2, the control unit 230 includes an acquisition unit 231, an identification unit 232, and a providing unit 233, and implements or executes functions and operation of information processing to be described below. Meanwhile, an internal configuration of the control unit 230 is not limited to the configuration illustrated in FIG. 2, and a different configuration may be adopted as long as it is possible to perform the information processing to be described below. Further, a connection relationship among the processing units that are included in the control unit 230 is not limited to the connection relationship as illustrated in FIG. 2, and it may be possible to adopt a different connection relationship.

### Acquisition unit 231

The acquisition unit 231 acquires the user information and stores the user information in the user information storage unit 221. For example, the acquisition unit 231 may acquire the user information from the on-vehicle apparatus 100.

### Identification unit 232

The identification unit 232 identifies the content information Cx that is to be output, by voice, in the vehicle VEx based on the user information. Further, the identification unit 232 may identify additional information that is to be added to the identified content information Cx. For example, the identification unit 232 may identify, as the additional information, information that indicates the type of the content information Cx, information that indicates the allowable range in which output of the content information Cx is allowed, the call information, or overview information that indicates an overview of the content information Cx.

Meanwhile, the identification unit 232 may set an appropriate allowable range based on a content of the content information Cx and the current location CPTx of the vehicle VEx. Further, the identification unit 232 may set an appropriate allowable range based on the content of the content information Cx and a current time at which the vehicle VEx is traveling. Furthermore, the identification unit 232 may set an appropriate allowable range based on the content of the content information Cx and a behavior of the vehicle VEx. In contrast, in some cases, the allowable range may be set in advance at the time of submission of the content information Cx.

Meanwhile, the identification unit 232 identifies individual content information Cx that correspond to each of the vehicles VEx. Therefore, the content of the content information Cx that is acquired by the on-vehicle apparatus 100a that is mounted on the vehicle VEx is different for each of the vehicles VEx.

### Providing unit 233

The providing unit 233 provides the content information Cx that is identified by the identification unit 232 to the passenger of the vehicle VEx. Specifically, the providing unit 233 transmits the content information Cx to the on-vehicle apparatus 100a. Meanwhile, the providing unit 233 may provide the content information Cx to which the additional information that is identified by the identification unit 232 is added.

### 3. Flow of process

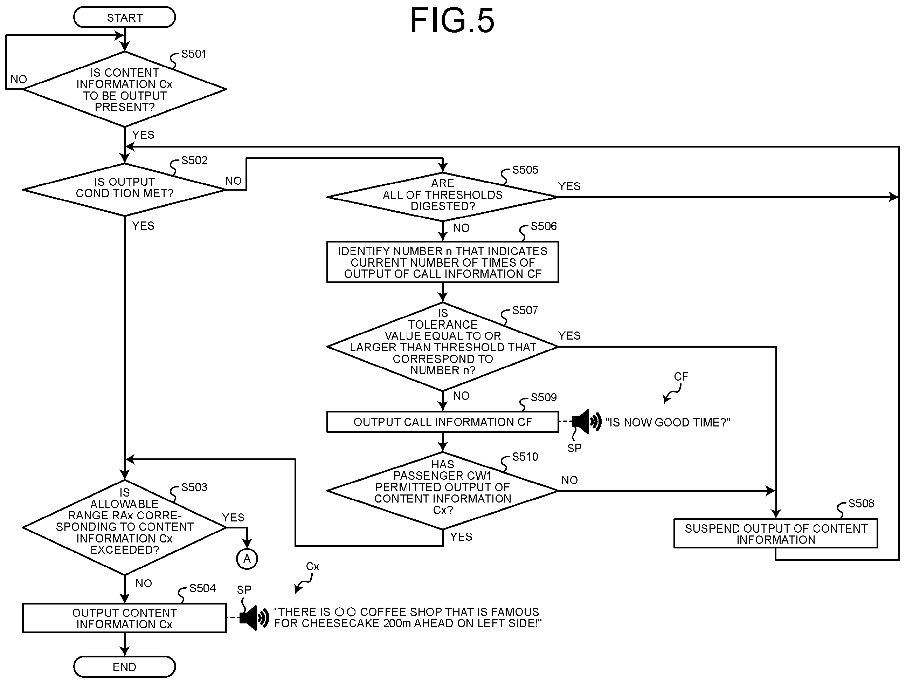

A specific example of an output control process according to the first embodiment will be described below with reference to FIG. 5. FIG. 5 is a flowchart illustrating the flow of the output control process according to the first embodiment. FIG. 5 illustrates a case in which the on-vehicle apparatus 100a that is mounted on the vehicle VE1 performs the output control process. Meanwhile, the output control process illustrated in FIG. 5 may be started at the time an engine of the vehicle VE1 is started, and may be terminated at the time the engine of the vehicle VE1 is stopped, for example.

First, the acquisition unit 132 determines whether or not the content information Cx to be output is present(Step S501). Specifically, the acquisition unit 132 determines whether or not the content information Cx has been acquired in accordance with provision of the content information Cx by the server apparatus 200.

While the content information Cx to be output is not acquired (Step S501; No), the acquisition unit 132 waits until the content information Cx to be output is acquired.

When the acquisition unit 132 acquires the content information Cx (Step S501; Yes), the output control unit 133a refers to the output determination table 122 and determines whether or not the output condition is met (Step S502). Specifically, the output control unit 133a acquires situation information that indicates the current situation SAy of the passenger CW1 in the vehicle VE1, compares a combination of the situation SAy and the type of the content information Cx with the output determination table 122, and determines whether or not the output condition is met.

When determining that the output condition is met (Step S502; Yes), the output control unit 133a recognizes that the situation SAy of the passenger CW1 is a situation in which it is not needed to refrain from outputting the content information Cx. Further, the output control unit 133a determines whether or not the allowable range RAx corresponding to the content information Cx is exceeded (Step S503).

When determining that the allowable range RAx is not exceeded (Step S503; No), the output control unit 133a performs output control such that the content information Cx is output from the speaker SP (Step S504).

For example, it is assumed that the content information Cx is recommend information, such as "there is ∘∘ coffee shop that is famous for cheesecake!" In this case, the output control unit 133a may calculate a positional relationship (for example, a distance and a direction) of a location SPTx of a spot (∘∘ coffee shop) that is a target in the content information Cx while adopting a current location CPT1 of the vehicle VE1 as a start point, based on the location SPTx and the current location CPT1. Further, the output control unit 133a may edit the content of the content information Cx based on the calculation result, compose a voice that reads the edited content information Cx, and output the voice from the speaker SP.

FIG. 5 illustrates an example in which the speaker SP outputs, as the edited content information Cx, "there is ∘∘ coffee shop that is famous for cheesecake 200 m ahead on left side!".

In contrast, when the output control unit 133a determines that the allowable range RAx is exceeded (Step S503; Yes), the process goes to Step A. An output control process that is performed at Step A and subsequent Steps will be described later as a second embodiment.

Referring back to Step S502, when determining that the output condition is not met (Step S502; No), the output control unit 133a recognizes that the situation SAy of the passenger CW1 is a situation in which it is needed to refrain from outputting the content information Cx. In the example of the output determination table 122 illustrated in FIG. 3, when the passenger CW1 is in the situation SA2 of "having conversations" and the type of the content information Cx is "recommend", the output control unit 133a recognizes that it is needed to refrain from outputting the content information Cx in the current situation of having conversations.

In the state as described above, first, the output control unit 133a determines whether or not all of thresholds that are set in a stepwise manner with respect to an allowable limit that is a limit value of the allowable range RAx are digested (Step S505).

For example, assuming that the allowable range RAx is a geographical range of "1,000 m to 30 m", in some cases, a plurality of thresholds may be set such that a first threshold is "500 m", a second threshold is "250 m", and a third threshold is "100 m". In this example, while the output condition is not met and the passenger CW1 does not permit output of the content information Cx in response to the call information CF, the output control unit 133a performs determination on whether or not the grace distance (tolerance value) that is left until the area limit (allowable limit) that is the limit value of the allowable range RAx at the current time point exceeds the first threshold, the second threshold, and the third threshold in sequence in accordance with the number of times of output of the call information CF.

As another example, assuming that the allowable range RAx is a temporal range of "11:00 on July 12, 2022 to 12:00 on July 12, 2002", in some cases, a plurality of thresholds may be set such that the first threshold is "11:30", the second threshold is "11:40", and the third threshold is "11:50". In this example, while the output condition is not met and the passenger CW1 does not permit output of the content information Cx in response to the call information CF, the output control unit 133a performs determination on whether or not the grace distance (tolerance value) that is left until the area limit (allowable limit) that is the limit value of the allowable range RAx at the current time point exceeds the first threshold, the second threshold, and the third threshold in sequence in accordance with the number of times of output of the call information CF.

In the example as described above, for example, when the tolerance value that is left until the allowable limit at the current time point is smaller than the third threshold, and if the call information CF has been output three times in accordance with the three thresholds, the output control unit 133a is able to determine that all of the thresholds are digested.

When determining that all of the thresholds that are set in a stepwise manner with respect to the allowable limit are digested (Step S505; Yes), the process goes to Step S502 and the output control unit 133a re-determines whether or not the output condition is met.

In contrast, when determining that all of the thresholds that are set in a stepwise manner with respect to the allowable limit are not digested (Step S505; No), the output control unit 133a identifies a number n that indicates the current number of times of output of the call information CF (Step S506).

An example of the method of outputting the call information CF based on the threshold will be described in detail below. For example, when the tolerance value is equal to or larger than the first threshold and the call information CF has not been output since acquisition of the content information Cx, the output control unit 133a identifies that the number n = 1 (output number_first time). In contrast, when the passenger CW1 does not permit output of the content information Cx in response to the first call information CF that is output because the first threshold is exceeded and when the output condition is not yet met, the output control unit 133a identifies that the number n = 2 (output number_second time). Furthermore, when the passenger CW1 does not permit output of the content information Cx in response to the second call information CF that is output because the second threshold is exceeded and when the output condition is not yet met, the output control unit 133a identifies that the number n = 3 (output number_third time). A specific loop as described above is implemented by the flow as described below.

Specifically, the output control unit 133a determines whether or not the tolerance value is equal to or larger than the threshold that corresponds to the number n (n-th time) (Step S507). For example, when identifying that the number n = 1 (output number_first time), the output control unit 133a determines whether or not the tolerance value is equal to or larger than the first threshold that corresponds to the first time. Further, when identifying that the number n = 2 (output number_second time), the output control unit 133a determines whether or not the tolerance value is equal to or larger than the second threshold that corresponds to the second time. Furthermore, when identifying that the number n = 3 (output number _third time), the output control unit 133a determines whether or not the tolerance value is equal to or larger than the third threshold that corresponds to the third time.

When determining that the tolerance value is equal to or larger than the threshold that corresponds to the number n (Step S507; Yes), the output control unit 133a recognizes that there is time to spare until the timing of output of the call information CF. In this case, the output control unit 133a temporarily suspends output of the content information Cx (Step S508), makes the process proceed to Step S502, and re-determines whether or not the output condition is met.

When determining that the tolerance value is smaller than the threshold that corresponds to the number n (Step S507; No), the output control unit 133a recognizes that a timing of output of the call information CF is exceeded (passed) and there is no time to spare. In this case, the output control unit 133a performs output control such that the call information CF is output from the speaker SP (Step S509).

For example, the output control unit 133a may compose a voice that reads the call information CF and output the voice from the speaker SP.

FIG. 5 illustrates an example in which the speaker SP outputs, as the call information CF, "Is now good time?"

Subsequently, the output control unit 133a determines whether or not the passenger CW1 has permitted output of the content information Cx in response to the call information CF (Step S510). For example, the output control unit 133a is able to determine whether or not the passenger CW1 has permitted output of the content information Cx based on a spoken content that is analyzed from a spoken voice data that is collected by the microphone MC. Alternatively, the output control unit 133a may determine whether or not the passenger CW1 has permitted output of the content information Cx based on an input content that is input by operation on one of an accept button and a refusal button that are arranged on the on-vehicle apparatus 100a.

When determining that the passenger CW1 has permitted output of the content information Cx (Step S510; Yes), the process goes to Step S503, and the output control unit 133a determines whether or not the allowable range RAx that corresponds to the content information Cx is exceeded.

In contrast, when determining that the passenger CW1 has refused output of the content information Cx (Step S510; No), the output control unit 133a temporarily suspends output of the content information Cx and the process goes to Step S502.

### 4. Summary of output control according to first embodiment

In the output control process according to the first embodiment as described above with reference to FIG. 5, even when the situation SAy of the passenger CWx is a situation in which it is needed to refrain from outputting the content information Cx, the call information CF that asks for permission for the content information Cx is output within an output deadline of the content information Cx. Further, output of the content information Cx is controlled in accordance with a content of the reply that is given by the passenger CWx in response to the call information CF. According to the output control process as described above, it is possible to keep looking for an opportunity to output the content information Cx without giving a bad impression to the passenger CWx, so that it is possible to increase opportunities to provide useful information to the user.

Furthermore, according to the output control process of the first embodiment, the call information CF is output only at a timing at which the tolerance value is smaller than the threshold, so that it is possible to prevent accumulation of discomfort due to continuous output of the call information CF unless the output condition is met, for example.

### 5. Modification of first embodiment

The on-vehicle apparatus 100a according to the first embodiment may be embodied by a certain mode that is different from the output control process described as the first embodiment. Therefore, a modification of the output control process according to the first embodiment will be described below.

### Output control unit 133a

In the first embodiment as described above, the example has been described in which when the output control unit 133a does not output the content information Cx because the output condition is not met, the output control unit 133a outputs the call information CF for obtaining, from the passenger CWx, a permission for output of the content information Cx in the allowable range RAx.

However, when the output control unit 133a does not output the content information Cx because the output condition is not met, the output control unit 133a may output call information CFn (CF1, CF2, ...) for attracting attention of the passenger CWx to the content information Cx and overview information OVn (OV1, OV2, ...) that indicates an overview of the content information in the allowable range RAx.

For example, while the content information Cx is not output, the output control unit 133a outputs the call information CFn and the overview information OVn that is associated with the call information CFn at a predetermined timing in the allowable range RAx, and changes a content of at least one of the call information CFn and the overview information OVn in accordance with an increase in the number of times of output.

Specifically, when the tolerance value that is left until the allowable limit that is the limit value of the allowable range RAx at the current time point is equal to or larger than the first threshold, the output control unit 133a does not output the call information CFn and the overview information OVn, and re-determines whether or not the output condition is met. Further, when the tolerance value becomes smaller than the first threshold in the state in which the output condition is not met, the output control unit 133a outputs the call information CFn and the overview information OVn. For example, the output control unit 133a may output the call information CFn to which the overview information OVn is added.

When the passenger CWx gives a reply (negative reply) that indicates negative for the call information CFn to which the overview information OVn is added, the output control unit 133a does not output the content information Cx, and re-determines whether or not the output condition is met.

In this manner, while the output condition is not met and the passenger CWn gives a negative reply to the call information CFn, the output control unit 133a outputs the call information CFn and the overview information OVn at the predetermined timing that corresponds to a decrease in the tolerance value. For example, the output control unit 133a outputs the call information CFn to which the overview information OVn is added, and changes a content of at least one of the call information CFn and the overview information OVn in accordance with an increase in the number of times of output.

For example, the output control unit 133a may output the call information CFn (for example, CF2) with a content for which an attention level is increased as compared to the call information CFn (for example, CF1) that has already been output, in accordance with an increase in the number of times of output. Further, the output control unit 133a may output the overview information OVn (for example, OV2) with a content that is more simplified as compared to the overview information OVn (for example, OV1) that has already been output, in accordance with an increase in the number of times of output. The output control unit may output the call information CFn that is associated with the current number of times of output (the number of times of call), and may output the overview information OVn that is associated with the current number of times of output.

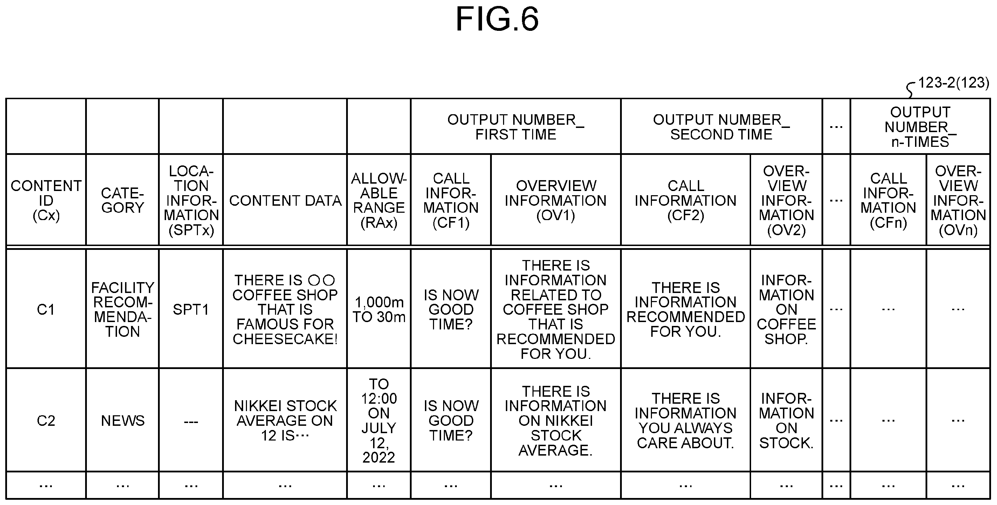

Meanwhile, the on-vehicle apparatus 100a may include the content information storage unit 123 that stores therein a data structure that can implement an output control process according to the modification for changing a content of at least one of the call information CFn and the overview information OVn in accordance with an increase in the number of times of output. Therefore, the content information storage unit 123 according to the modification of the first embodiment will be described below with reference to FIG. 6.

### Content information storage unit 123 according to modification

FIG. 6 is a diagram illustrating an example of the content information storage unit 123 that stores therein a data structure that can implement the output control process according to the modification of the first embodiment. FIG. 6 illustrates a content information storage unit 123-2 as one example of the content information storage unit 123 according to the modification of the first embodiment.

In the example illustrated in FIG. 6, the content information storage unit 123-2 includes items, such as a "content ID" (Cx), a "category", "location information" (SPTx), "content data", an "allowable range" (RAx), and "call information" (CF). The items are the same as those of the content information storage unit 123-1, and therefore, explanation thereof will be omitted.

Furthermore, in the example illustrated in FIG. 6, the content information storage unit 123-2 includes an item of "output number_n times". For example, the content information storage unit 123-2 may include items for the output number n, such as "output number_first time" and "output number _second time", as illustrated in FIG. 6.

The "output number_n times" corresponds to a current output number that is identified in accordance with the number of times of output of the call information CFn to which the overview information OVn is added.

First, in the example illustrated in FIG. 6, the call information CFn and the overview information OVn are registered in association with the "output number_n times". For example, the call information CF1 of "Is now good time?" and the overview information OV1 of "there is information related to coffee shop that is recommended for you" are registered in association with the item of "output number_first time" that is identified by the content ID of "C1" (the content information C1). Further, the call information CF2 of "there is information recommended for you" and the overview information OV2 of "information on coffee shop" are registered in association with the item of "output number _second time" that is identified by the content ID of "C1".

Here, when a content of the call information CF1 of "Is now good time?" and a content the call information CF2 of "there is information recommended for you" are compared with each other, the content of the call information CF2 is more detailed and may increase an attention level. As a result, the output control unit 133a is able to output the call information with a content with the improved attention level as compared to the call information that has been output, in accordance with an increase in the output number n.

Furthermore, when a content of the overview information OV1 of "there is information related to coffee shop that is recommended for you" and a content of the overview information OV2 of "information on coffee shop" are compared with each other, the content of the overview information OV2 is more simplified. As a result, the output control unit 133a is able to output the overview information with a more simplified content as compared to the overview information that has been output, in accordance with an increase in the output number n.

### 6. Example of operation according to modification

An example of operation that is implemented as the output control process according to the modification of the first embodiment will be described below. Specifically, a specific example of operation of the on-vehicle apparatus 100a that operates in accordance with the data structure of the content information storage unit 123-2 as illustrated in FIG. 6 will be described.

For example, FIG. 5 illustrates the example in which the output control unit 133a outputs the call information CF based on the threshold that is identified in accordance with the number of times of output of the call information CF and that corresponds to the current output number and based on the current tolerance value. Following the example as described above, in the modification, the output control unit 133a may output the call information CFn to which the overview information OVn is added, based on the threshold that is identified in accordance with the number of times of output of the call information CF and that corresponds to the current output number and based on the current tolerance value.

For example, while the output condition is not met and the passenger CWx does not permit output of the content information Cx in response to the call information CFn to which the overview information OVn is added, the output control unit 133a sequentially determines whether or not the threshold that corresponds to the tolerance value that is left until the allowable limit at the current time point is exceeded, in accordance with the output number of the call information. In other words, in the example illustrated in FIG. 5, the output control unit 133a is able to output the call information CFn to which the overview information OVn is added, in a stepwise manner, instead of the call information CF.

In the example illustrated in FIG. 5, more specifically, the output control unit 133a identifies that the number n = 1 (output number _first time) when the tolerance value is equal to or larger than the first threshold in a state in which the output condition is not met. As a result, the output control unit 133a outputs the call information CF1 to which the overview information OV1 is added. For example, the speaker SP outputs, in accordance with control that is performed by the output control unit 133a, "Is now good time? (call information), there is information related to coffee shop that is recommended for your (overview information)" as the call information CF1 to which the overview information OV1 is added.

When determining that the passenger CW1 gives a negative reply to the call information CF1 or when determining that the output condition is not met even by conditional determination that is performed again, the output control unit 133a identifies that the current number n = 2 (output number_second time). As a result, the output control unit 133a outputs the call information CF2 to which the overview information OV2 is added. For example, the speaker SP outputs, in accordance with control that is performed by the output control unit 133a, "there is information recommended for you (call information), information on coffee shop (overview information)" as the call information CF2 to which the overview information OV2 is added.

### 7. Summary of modification according to the first embodiment

According to the output control process of the modification of the first embodiment, the call information CFn is output in accordance with a decrease in the grace period for the output deadline of the content information, and the content of the call information CFn is changed to a content that attracts more attention with the decrease in the grace period. As a result, it is possible to prevent a state in which the call with the same content is repeated, and realize a natural call. Further, when the overview information is added when the call is repeated, the overview information is simplified with an increase in the number of times of call, so that it is possible to convey the overview of the content information in short words without repeating the same overview information.

### Second Embodiment

### 1. Functional configuration of on-vehicle apparatus

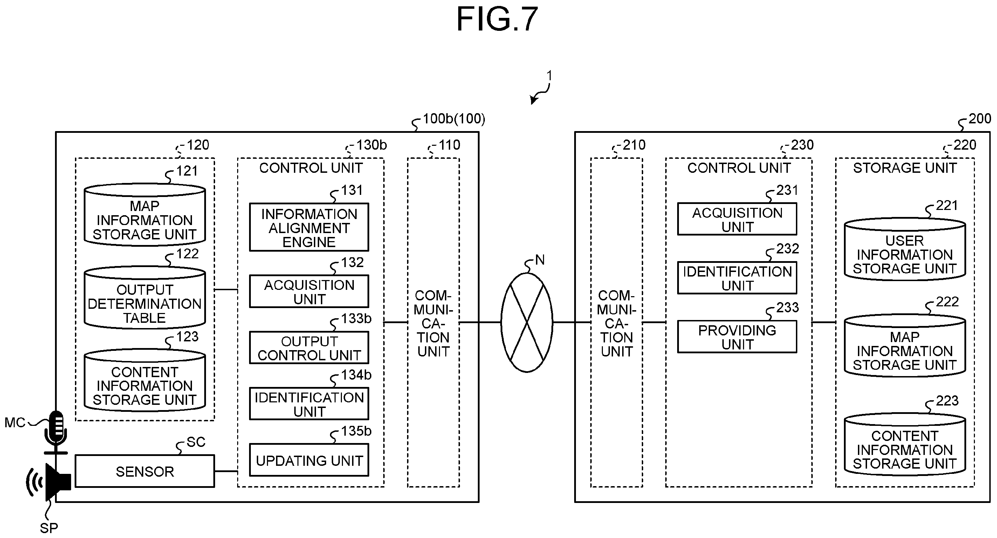

A second embodiment will be described below. FIG. 7 is a diagram illustrating a configuration example of each of apparatuses according to the second embodiment. FIG. 7 illustrates a configuration example of the on-vehicle apparatus 100b according to the second embodiment and a configuration example of the server apparatus 200 according to one embodiment. The server apparatus 200 may have the same configuration between the first embodiment and the second embodiment, and therefore, explanation thereof will be omitted.

In addition, detailed explanation of the processing units that are denoted by the same reference symbols between the on-vehicle apparatus 100a according to the first embodiment and the on-vehicle apparatus 100b according to the second embodiment will be omitted, and in the following, explanation will be given with a focus on new processing units that are included in the on-vehicle apparatus 100b according to the second embodiment.

As illustrated in FIG. 7, the on-vehicle apparatus 100b according to the second embodiment includes the microphone MC, the speaker SP, the sensor SC, the communication unit 110, the storage unit 120, and a control unit 130b.

### Control unit 130b

The control unit 130b is implemented by causing a CPU, an MPU, or the like to execute various kinds of program (for example, the information processing program according to one embodiment) that are stored in an internal storage device of the on-vehicle apparatus 100b by using a RAM as a work area. Further, the control unit 130b may be implemented by, for example, an integrated circuit, such as an ASIC or an FPGA.

As illustrated in FIG. 7, the control unit 130b includes the information alignment engine 131, the acquisition unit 132, an output control unit 133b, an identification unit 134b, and an updating unit 135b, and implements or executes functions and operation of information processing to be described below. Meanwhile, an internal configuration of the control unit 130b is not limited to the configuration illustrated in FIG. 7, and a different configuration may be adopted as long as it is possible to perform the information processing to be described below. Further, a connection relationship among the processing units that are included in the control unit 130b is not limited to the connection relationship as illustrated in FIG. 7, and it may be possible to adopt a different connection relationship.

### Identification unit 134b

The identification unit 134b identifies, as an output-pending content NCx, the content information Cx that is not output because the output condition is not met in the allowable range RAx that is associated with the content information Cx.

### Output control unit 133b

The output control unit 133b performs output control on the output-pending content NCx when the identification unit 134b identifies the output-pending content NCx.

Specifically, when the output condition is met for the output-pending content NCx, the output control unit 133b outputs the output-pending content NCx together with the reason that the output-pending content NCx has not been output at an originally expected timing. For example, the output control unit 133b may output the output-pending content NCx to which the situation SAy of the passenger CWx at that time in the allowable range RAx is added as the reason.

Furthermore, the output control unit 133b may identify the originally expected timing at which the output-pending content NCx is expected to be output, based on a movement history of the vehicle VEx and the allowable range RAx that is associated with the output-pending content NCx, and may further output information that indicates the identified timing.

Here, assuming that the output-pending content NCx is recommend information that recommends a predetermined spot, the associated allowable range RAx may be determined as area information that corresponds to the location SPTx of the predetermined spot. In this example, the output control unit 133b may identify a positional relationship between the location SPTx of the predetermined spot and the current location CPTx of the vehicle VEx at a timing at which the output-pending content NCx is output, and output information that indicates the identified positional relationship, together with the output-pending content NCx. For example, the output control unit 133b may output, as the information that indicates the positional relationship, information that indicates a distance to the predetermined spot while adopting the current location CPTx of the vehicle VEx as a start point, in such a manner that the information is added to the output-pending content NCx.

Meanwhile, the output control unit 133b is a processing unit that is substantially the same as the output control unit 133a according to the first embodiment, and has the same functions of the output control unit 133a.

### Updating unit 135b

The updating unit 135b updates a content of the output condition (in other words, the content of the output determination table 122) in accordance with the content of the reply that is given by the passenger CWx when the output-pending content NCx is output.

As a premise of a function of the updating unit 135b, first, the output control unit 133b performs a process as described below. Specifically, the output control unit 133b outputs query information Q with a content for asking the passenger CWx whether or not to permit output of the content information based on the reason that the output-pending content NCx has not been output in the allowable range RAx. More specifically, the output control unit 133b outputs the query information Q with a content for asking the passenger CWx whether or not to allow output of the content information in the situation SAy, based on the situation SAy of the passenger CWx at that time in the allowable range RAx.

The updating unit 135b updates the output condition that is defined based on a relationship between the type of the output-pending content NCx and the situation SAy (specifically, the situation SAy of the passenger CWx at that time in the allowable range RAx) that is a target in the query information Q, in accordance with a content of a reply that is given by the passenger CWx in response to the query information Q. Specifically, when the passenger CWx permits output of the content information in the situation SAy that is a target in the query information Q, the updating unit 135b updates the content of the output condition in the output determination table 122 with a content indicating that a content of the above-described type will be output from now on in the target situation SAy.

### 2. Flow of process

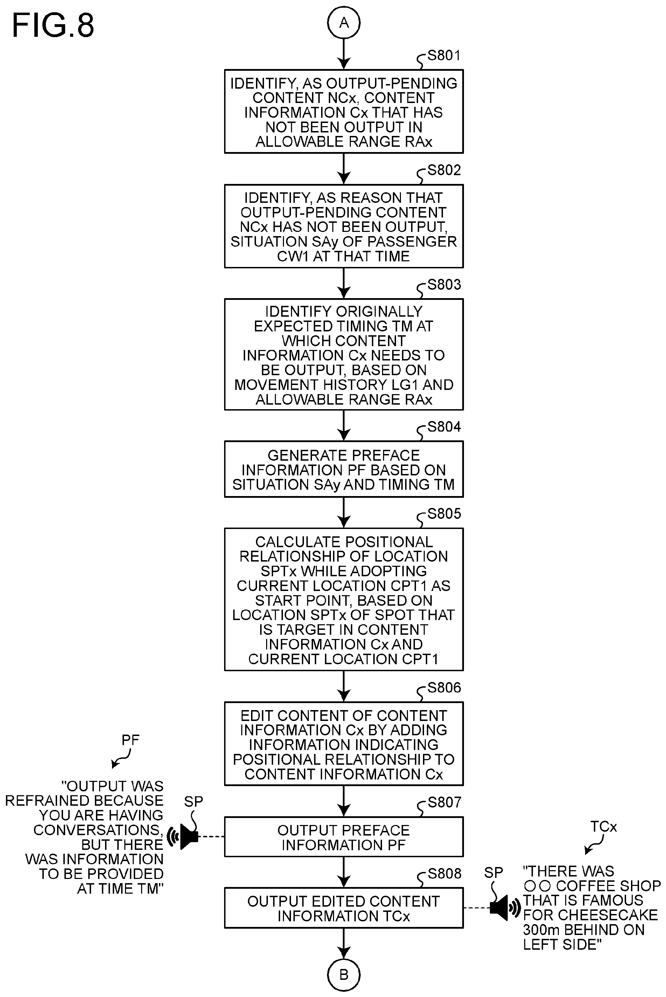

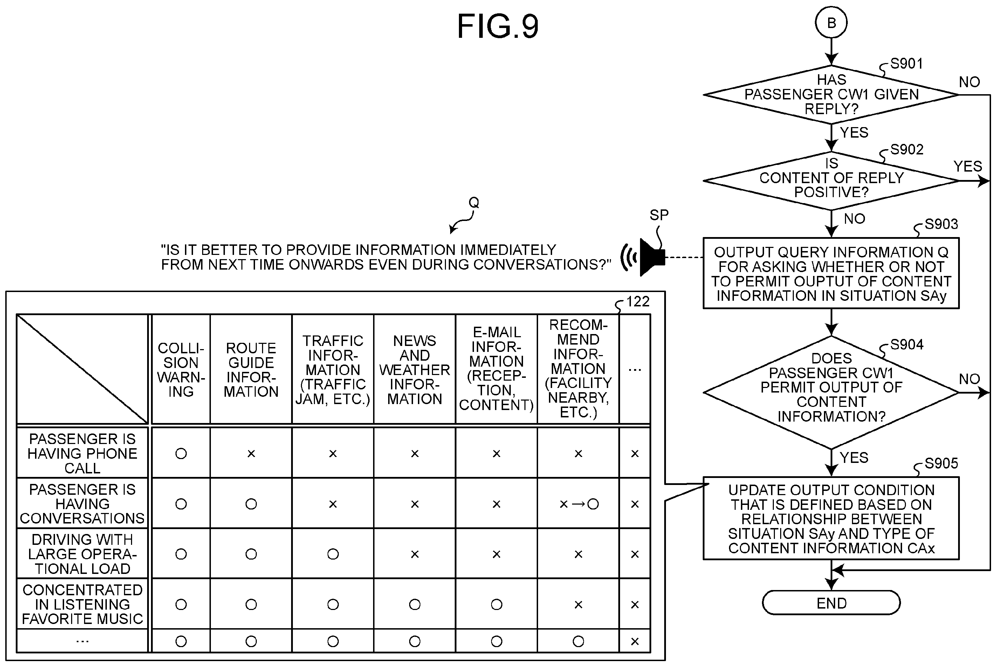

A specific example of the output control process according to the second embodiment will be described below with reference to FIG. 8 and FIG. 9. FIG. 8 illustrates the flow of output control on the output-pending content NCx. FIG. 9 illustrates the flow of an update process that is performed in accordance with a reply that is given by the passenger CWx with respect to the output-pending content NCx.

### 2-1. First flow of process

FIG. 8 is a flowchart illustrating the flow of the output control process for outputting the output-pending content NCx. The output control process for outputting the output-pending content NCx may be started when the process goes to Step A as described above with reference to FIG. 5. Specifically, the output control process for outputting the output-pending content NCx may be started when it is determined that the allowable range RAx is exceeded at Step S503 in FIG. 5. Therefore, the example illustrated in FIG. 5 will be adopted again, and the flow of the output control process illustrated in FIG. 8 will be described.

First, the identification unit 134b identifies, as the output-pending content NCx, the content information Cx that has not been output in the allowable range RAx (Step S801).

Subsequently, the output control unit 133b identifies, as the reason that the output-pending content NCx has not been output, the situation SAy of the passenger CW1 at the time the output-pending content NCx was not output (Step S802). Here, the situation SAy of the passenger CW1 at the time the output-pending content NCx was not output is the situation SAy of the passenger CW1 at the time the allowable range RAx was exceeded before the output condition was met, and, in practical, indicates the situation SAy at that time in the allowable range RAx. In the following, the situation SAy of the passenger CW1 in the vehicle VE1 at that time will be described as a "situation SAy(P)". In the example in FIG. 5, the output control unit 133b identifies the situation SAy(P) in which the output condition is met (Step S502; Yes), but which is before the timing at which it is determined that the allowable range RAx is exceeded (Step S503; Yes).

Subsequently, the output control unit 133b identifies an originally expected timing TM at which the content information Cx needs to be output, based on a movement history LG1 of the vehicle VE1 and the allowable range RAx (Step S803). For example, the output control unit 133b may identify, as the timing TM, a date and time (in other words, a date and time at the time of Step S501) at which the content information Cx is acquired among past dates and times at which the vehicle VE1 was traveling in the allowable range RAx, based on the movement history LG1 and the allowable range RAx. Further, the output control unit 133b may identify the location information on the vehicle VE1 at the timing TM based on the movement history LG1.

Furthermore, the output control unit 133b generates preface information PF based on the situation SAy(P) and the timing TM (Step S804). For example, the output control unit 133b may generate, as the preface information PF, text information with a content of "output was refrained because you are having conversations, but there was information to be provided at time TM". In this example, "you are having conversations" included in the preface information PF corresponds to the situation SAy(P), and "time TM" corresponds to the timing TM.

Subsequently, the output control unit 133b calculates a positional relationship (for example, a distance and a direction) of the location SPTx while adopting the current location CPT1 as a start point, based on the location SPTx of the spot that is a target in the content information Cx and the current location CPT1 of the vehicle VE1 (Step S805).

For example, it is assumed that the content information Cx is recommend information with a content of "there is ∘∘ coffee shop that is famous for cheesecake!" In this case, the output control unit 133b calculates a positional relationship (for example, a distance and a direction) of the location SPTx while adopting the current location CPT1 of the vehicle VE1 as a start point, based on the location SPTx of the spot (∘∘ coffee shop) that is a target in the content information Cx and the current location CPT1.

Further, the output control unit 133a edits the content of the content information Cx by adding information that indicates the calculated positional relationship to the content information Cx (Step S806). For example, when the positional relationship of "300 m behind on left side" is calculated at S805, the output control unit 133b is able to generate the content information TCx with a content of "there was ∘∘ coffee shop that is famous for cheesecake 300 m behind on left side" by editing the content information Cx by using the positional relationship.

In this state, first, the output control unit 133b performs output control such that the preface information PF is output from the speaker SP (Step S807). For example, the output control unit 133b may compose a voice that reads the preface information PF, and output the voice from the speaker SP.

FIG. 8 illustrates an example in which the speaker SP outputs, as the preface information PF, "output was refrained because you are having conversations, but there was information to be provided at time TM".

Furthermore, the output control unit 133b performs output control such that the edited content information TCx is output from the speaker SP (Step S808). For example, the output control unit 133b may compose a voice that reads the content information TCx, and output the voice from the speaker SP.

FIG. 8 illustrates an example in which the speaker SP outputs, as the content information TCx, "there was ∘∘ coffee shop that is famous for cheesecake 300 m behind on left side".

Furthermore, thereafter, the process goes to Step B. An output control process that is performed at Step B and subsequent Steps will be described below with reference to FIG. 9.

### 2-2. Second flow of process

FIG. 9 is a flowchart illustrating the flow of the update process for updating the output condition. The update process for updating the output condition may be started when the edited content information TCx is output at Step S808 in FIG. 8. Therefore, the example illustrated in FIG. 8 will be adopted again, and the flow of the update process illustrated in FIG. 9 will be described.

First, the output control unit 133b determines whether or not the passenger CW1 has given a certain reply to the content information TCx (Step S901). For example, the output control unit 133a is able to determine whether or not the passenger CW1 has given a certain reply to the content information TCx based on a spoken voice data that is collected by the microphone MC or an input content that is input by operation on the on-vehicle apparatus 100b.

When determining that the passenger CW1 has given a certain reply to the content information TCx (Step S901; Yes), the output control unit 133b determines whether or not a content of the reply is positive (Step S902). For example, the output control unit 133b is able to determine whether or not a content of the reply is positive based on a spoken voice data that is collected by the microphone MC or an input content that is input by operation on the on-vehicle apparatus 100b.

As one example, when the passenger CW1 has spoken a phrase of "Thank you! It is okay" or the like or when an "accept" button that is arranged on a screen of the on-vehicle apparatus 100b is pressed, the output control unit 133b is able to determine that the content of the reply is positive. In contrast, when the passenger CW1 has spoken a phrase of "It is too late to provide information!" or when a "refusal" button that is arranged on the screen of the on-vehicle apparatus 100b is pressed, the output control unit 133b is able to determine that the content of the reply is negative.

When determining that the content of the reply is not positive (Step S902; No), the output control unit 133b outputs the query information Q with a content for asking the passenger CWx whether or not to permit output of the content information based on the situation SAy of the passenger CW1(P) at the time the allowable range RAx is exceeded before the output condition is met (Step S903).

Specifically, the output control unit 133b generates the query information Q with a content for asking the passenger CWx whether or not to output the content information in the situation SAy(P), and performs output control such that the query information Q is output from the speaker SP. For example, the output control unit 133b may compose a voice that reads the query information Q, and output the voice from the speaker SP.

For example, the output control unit 133b is able to generate the query information Q with a content of "Is it better to provide information immediately from next time onwards even during conversations?" In this example, "during conversations" included in the query information Q corresponds to the situation SAy(P).

FIG. 9 illustrates an example in which the speaker SP outputs, as the query information Q, "Is it better to provide information immediately from next time onwards even during conversations?"

Subsequently, the output control unit 133b determines whether or not the passenger CW1 permits out of the content information in the situation SA(y) in response to the query information Q (Step S904). For example, the output control unit 133b is able to determine whether or not the passenger CW1 permits output of the content information in the situation SA(y) based on a spoken content that is analyzed from the voice data that is collected by the microphone MC or an input content that is input by operation on the on-vehicle apparatus 100b.

When the passenger CW1 permits output of the content information even in the situation SA(y) (Step S904; Yes), the updating unit 135b updates the output condition that is defined based on a relationship between the type of the output-pending content NCx and the situation SAy(P) (Step S905). Specifically, the updating unit 135b updates the content of the output condition in the output determination table 122 with a content of the type of the output-pending content NCx in the situation SAy(P).

Here, in an example in which the situation SAy(P) is the situation SA2, that is, "passenger is having conversations", and the type of the output-pending content NCx is "recommend information", the updating unit 135b updates the content of the output condition in the output determination table 122 as illustrated in FIG. 9. In other words, the updating unit 135b updates conditional information that is defined by a combination of the situation SA2 of "passenger is having conversations" and the type of the content information of "recommend information" from "×" to "∘".

Returning to the explanation, when the passenger CW1 does not give a reply to the content information TCx (Step S901; No), when determining that the content of the reply is positive (Step S902; Yes), and when the passenger CW1 does not permit output of the content information in the situation SA(y) (Step S904; No), the updating unit 135b terminates the process without performing the update process.

### 3. Summary of output control according to second embodiment

According to the output control process of the second embodiment described above with reference to FIG. 8, when the situation SAy of the passenger CWx is changed to a situation in which it is not needed to refrain from outputting the content information Cx after expiry of the output deadline, the content information Cx that has not been output until the output deadline and the reason that the content information Cx has not been output are output. According to the output control process as described above, it is possible to increase opportunities to provide useful information to the user without giving a bad impression to the passenger CWx.

Furthermore, according to the output control process of the second embodiment described above with reference to FIG. 9, when the situation SAy of the passenger CWx is a situation in which it is need to refrain from outputting the content information Cx, the content information Cx is not output. In contrast, in the situation SAy in which it is needed to refrain from outputting the content information Cx, an intention of the passenger CWx about permission for output of the content information Cx is asked, and a content of the conditional information is updated such that the content information Cx is output from now on in accordance with the intention. According to the output control process as described above, it is possible to increase opportunities to provide useful information to the user without giving a bad impression to the passenger CWx.

### Third Embodiment

### 1. Functional configuration of on-vehicle apparatus

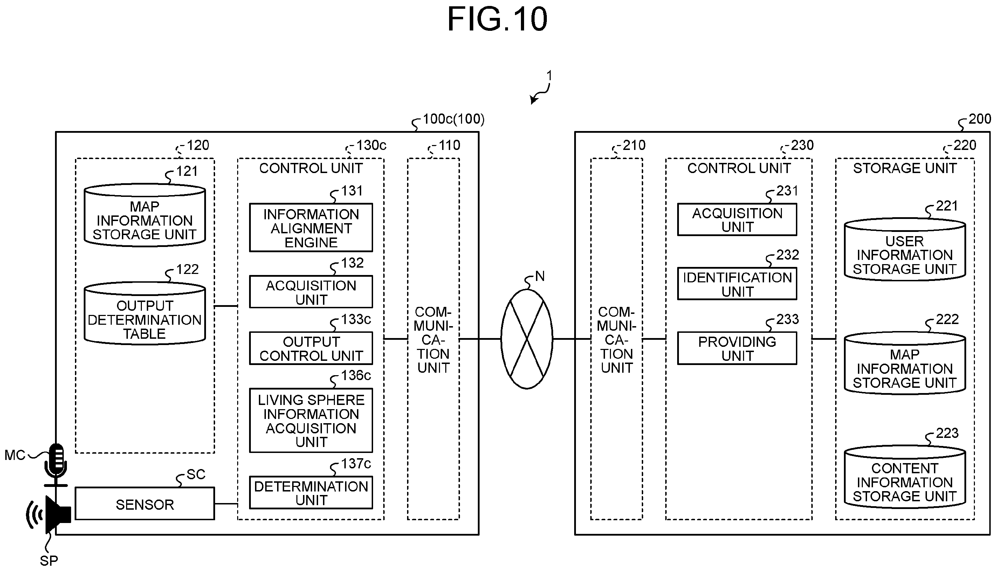

A third embodiment will be described below. FIG. 10 is a diagram illustrating a configuration example of each of apparatuses according to the third embodiment. FIG. 10 illustrates a configuration example of the on-vehicle apparatus 100c according to the third embodiment and the configuration example of the server apparatus 200 according to one embodiment. The configuration of the server apparatus 200 may be the same between the first embodiment and the third embodiment, and therefore, explanation thereof will be omitted.

Furthermore, detailed explanation of the processing units that are denoted by the same reference symbols between the on-vehicle apparatus 100a according to the first embodiment and the on-vehicle apparatus 100c according to the third embodiment will be omitted, and explanation will be given below with a focus on new processing units that are included in the on-vehicle apparatus 100c according to the third embodiment.

As illustrated in FIG. 10, the on-vehicle apparatus 100c according to the third embodiment includes the microphone MC, the speaker SP, the sensor SC, the communication unit 110, the storage unit 120, and a control unit 130c.

### Control unit 130c

The control unit 130c is implemented by causing a CPU, an MPU, or the like to execute various kinds of program (for example, the information processing program according to one embodiment) that are stored in an internal storage device of the on-vehicle apparatus 100c by using a RAM as a work area. Further, the control unit 130c may be implemented by, for example, an integrated circuit, such as an ASIC or an FPGA.

As illustrated in FIG. 10, the control unit 130c includes the information alignment engine 131, the acquisition unit 132, an output control unit 133c, a living sphere information acquisition unit 136c, and a determination unit 137c, and implements or executes functions and operation of information processing to be described below. Meanwhile, an internal configuration of the control unit 130c is not limited to the configuration illustrated in FIG. 10, and a different configuration may be adopted as long as it is possible to perform the information processing to be described below. Further, a connection relationship among the processing units that are included in the control unit 130c is not limited to the connection relationship as illustrated in FIG. 10, and it may be possible to adopt a different connection relationship.

### Output control unit 133c

The output control process according to the third embodiment is aimed at, during traveling outside a living sphere (for example, a travel destination) of the passenger CWx, forcibly outputting the content information Cx that is provided by the server apparatus 200 so as not to miss a predetermined spot if the content of the content information Cx is recommendation of the predetermined spot that is located in the allowable range RAx (if the spot is passed by, it may be difficult to have a chance to visit the spot in the future).

In other words, when the determination unit 137c (to be described later) determines that the vehicle VEx is moving outside the living sphere of the passenger CWx, even in the state in which the output condition is not met, the output control unit 133c outputs content information of a predetermined type in the allowable range RAx that is associated with the content information.

Specifically, when it is determined that the vehicle VEx is moving outside the living sphere of the passenger CWx, even in the state in which the output condition is not met, the output control unit 133c outputs recommend information that recommends a predetermined spot around the vehicle VEx in the allowable range RAx that is associated with the recommend information.

For example, when the tolerance value that is left until the allowable limit that is the limit value of the allowable range RAx in which output of the recommend information is allowed at the current time point becomes smaller than a threshold, and if the vehicle VEx is moving outside the living sphere, the output control unit 133c outputs the recommend information.

For example, the output control unit 133c may identify a positional relationship between the predetermined location SPTx of the spot and the current location CPTx of the vehicle VEx at the timing of output of the recommend information, and output information that indicates the identified positional relationship together with the recommend information. For example, the output control unit 133c may output, as the information that indicates the positional relationship, information that indicates a distance to the predetermined spot while adopting the current location CPTx of the vehicle VEx as a start point, in such a manner that the information is added to the recommend information.

Meanwhile, the output control unit 133c is a processing unit that is substantially the same as the output control unit 133a according to the first embodiment, and has the same functions of the output control unit 133a.

### Living sphere information acquisition unit 136c

The living sphere information acquisition unit 136c acquires living sphere information on a living sphere of the passenger CWx, which is identified based on the movement history of the passenger CWx. For example, the on-vehicle apparatus 100c may have a function to periodically determine a living sphere based on the movement history of the vehicle VEx and update the information on the living sphere with the latest state. With this function, for example, it may be possible to determine the living sphere based on a distribution state of locations in which the vehicle VEx has travelled and locations in which the vehicle VEx has stopped.

### Determination unit 137c

The determination unit 137c determines whether or not the vehicle VEx is travelling outside the living sphere of the passenger CWx. Specifically, the determination unit 137c determines whether or not the vehicle VEx is travelling outside the living sphere of the passenger CWx based on the current location CPTx of the vehicle VEx and the living sphere information.

### 2. Flow of process

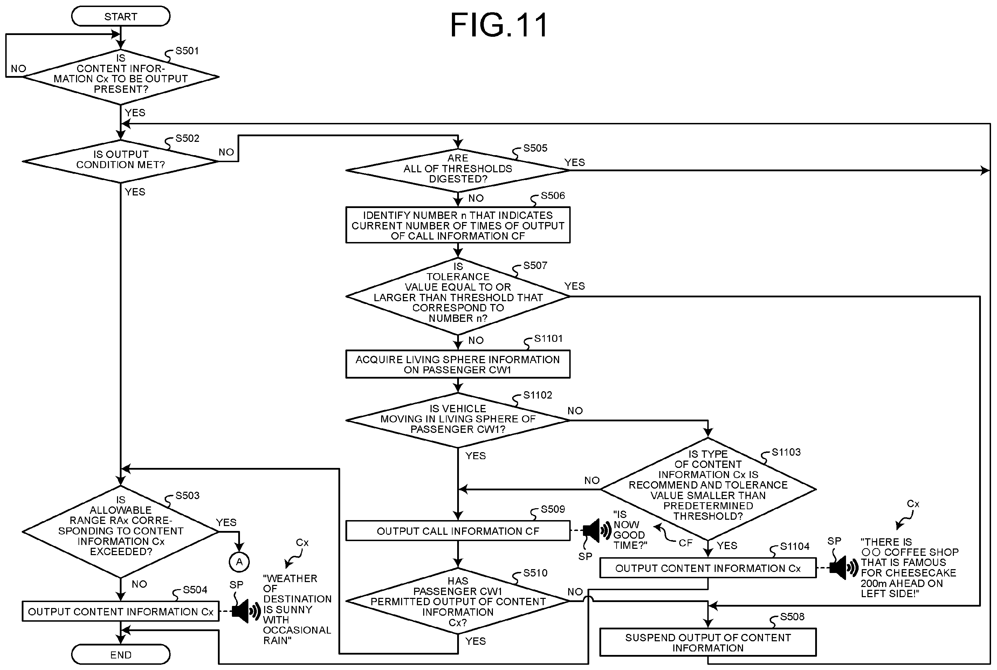

A specific example of the output control process according to the third embodiment will be described below with reference to FIG. 11. FIG. 11 is a flowchart illustrating the flow of the output control process according to the third embodiment. FIG. 11 illustrates a scene in which the on-vehicle apparatus 100c that is mounted on the vehicle VE1 performs the output control process.

Meanwhile, the output control process according to the third embodiment may be performed together with the output control process according to the first embodiment. Therefore, the flowchart illustrated in FIG. 11 is obtained by changing a part of the flowchart illustrated in FIG. 5. Specifically, Step S1101 to Step S1104 illustrated in FIG. 11 indicate the flow of the output control process according to the third embodiment. FIG. 11 illustrates the flow of the output control process according to the third embodiment with a focus on Steps as described above.

The output control unit 133c determines whether or not the tolerance value is equal to or larger than the threshold that corresponds to the number n (n times) (Step S507). When determining that the tolerance value is equal to or larger than the threshold that corresponds to the number n (Step S507; Yes), the output control unit 133c recognizes that there is time to spare until the timing of output of the call information CF.

In the state as described above, the living sphere information acquisition unit 136c acquires the living sphere information on the passenger CW1 (Step S1101). The on-vehicle apparatus 100c may have the latest living sphere information on the passenger CW1 in the storage unit 120, and the living sphere information acquisition unit 136c may acquire the latest living sphere information on the passenger CW1 from the storage unit 120.

The determination unit 137c determines whether or not the vehicle VE1 is moving in the living sphere of the passenger CW1 based on the current location CPTx of the vehicle VEx and the living sphere information (Step S1102).

When it is determined that the vehicle VE1 is moving in the living sphere of the passenger CW1 (Step S1102; Yes), the output control unit 133c performs output control such that the call information CF is output from the speaker SP (Step S509).

In contrast, when it is determined that the vehicle VE1 is not moving in the living sphere of the passenger CW1 (in other words, the vehicle VE1 is moving outside the living sphere of the passenger CW1) (Step S1102; No), the output control unit 133c determines whether or not the type of the content information Cx that is acquired at Step S501 is recommend and the tolerance value that is left until the allowable limit that is the limit value of the allowable range RAx in which output of the content information Cx is allowed at the current time point is smaller than a predetermined threshold (Step S1103).

When the output control unit 133c determines that the type of the content information Cx is not recommend or the tolerance value that is left until the allowable limit of the content information Cx at the current time point is not smaller than the predetermined threshold (Step S1103; No), the process goes to Step S509.

In this manner, by determining whether or not the type of the content information Cx is not recommend and the tolerance value that is left until the allowable limit of the content information Cx at the current time point is smaller than the predetermined threshold, even when the type of the content information Cx is recommend, if there is plenty of time to spare until the allowable limit of output of the content information Cx, it is possible to output the call information CF once at Step S509.

In contrast, when determining that the type of the content information Cx is recommend or the tolerance value that is left until the allowable limit of the content information Cx at the current time point is smaller than the predetermined threshold (Step S1103; Yes), the output control unit 133c recognizes that the output condition is not met at this time, but the now is the time to output the current content information Cx with a content as a recommendation of the spot that is located outside the living sphere.

Further, the output control unit 133c performs output control such that the content information Cx is output from the speaker SP (Step S1104).

For example, it is assumed that the content information Cx is recommend information with a content of "there is ○○ coffee shop that is famous for cheesecake ... !" In this case, the output control unit 133c may calculate a positional relationship (for example, a distance and a direction) of the location SPTx while adopting the current location CPT1 of the vehicle VE1 as a start point, based on the location SPTx of the spot (○○ coffee shop) that is a target in the content information Cx and the current location CPT1. Further, the output control unit 133c edits the content of the content information Cx based on the calculation result, composes a voice that reads the edited content information Cx, and outputs the voice from the speaker SP.

FIG. 11 illustrates an example in which the speaker SP outputs, as the edited content information Cx, "there is ○○ coffee shop that is famous for cheesecake 200 m ahead on left side!"

Meanwhile, when, at Step S1103, it is determined whether or not the type of the content information Cx that is acquired at Step S501 is recommend and when it is determined that the type of the content information Cx is recommend, it may be possible to immediately output the content information Cx.

### 3. Summary of output control according to third embodiment

According to the output control process of the third embodiment as described above with reference to FIG. 11, even when the situation SAy of the passenger CWx is a situation in which it is needed to refrain from outputting the content information Cx, if the vehicle is traveling outside the living sphere (for example, a travel destination) of the passenger CWx, only the content information Cx that recommends a spot that is located outside the living sphere is output in the allowable range RAx of the content information Cx. According to the output control process as described above, it is possible to infallibly provide information on a spot for which an opportunity to visit is limited, so that it is possible to increase an opportunity to provide useful information to the user.

### Others

### 1. Hardware configuration

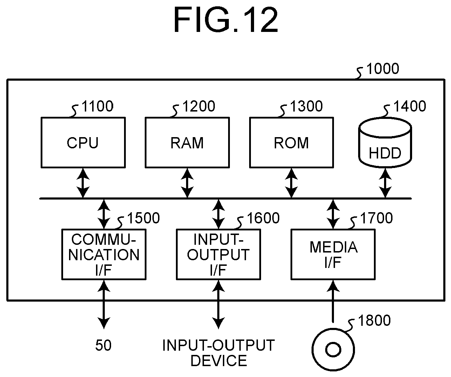

The on-vehicle apparatus 100 (the on-vehicle apparatuses 100a, 100b, and 100c) may be implemented by a computer 1000 that is configured as illustrated in FIG. 12. FIG. 12 is a hardware configuration diagram illustrating a computer that implements the functions of the on-vehicle apparatus 100. The computer 1000 includes a CPU 1100, a RAM 1200, a ROM 1300, an HDD 1400, a communication interface (I/F) 1500, an input-output interface (I/F) 1600, and a media interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer 1000, a program that is dependent on hardware of the computer 1000, or the like.

The HDD 1400 stores therein a program that is executed by the CPU 1100, data that is used by the program, or the like. The communication interface 1500 receives data from a different device via a predetermined communication network, sends the data to the CPU 1100, and transmits data that is generated by the CPU 1100 to a different device via the predetermined communication network.

The CPU 1100 controls an output device, such as a display, and an input device, such as a keyboard, via the input-output interface 1600. The CPU 1100 acquires data from the input device via the input-output interface 1600. Further, the CPU 1100 outputs generated data to the output device via the input-output interface 1600.

The media interface 1700 reads a program or data that is stored in a recording medium 1800, and provides the program or the data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a Digital Versatile Disc (DVD) or a Phase change rewritable Disk (PD), a magneto-optical recording medium, such as a Magneto-Optical disk (MO), a tape medium, a magnetic recording medium, a semiconductor memory, or the like.

For example, when the computer 1000 functions as the on-vehicle apparatus 100 according to one embodiment, the CPU 1100 of the computer 1000 executes a program that is loaded on the RAM 1200, so that the functions of a control unit 130 (130a, 130b, and 130c) are implemented. The CPU 1100 of the computer 1000 reads the program from the recording medium 1800 and executes the program; however, as another example, it may be possible to acquire the program from a different device via the predetermined communication network.

### 2. Others

Of the processes described in the embodiments, all or part of a process described as being performed automatically may also be performed manually. Alternatively, all or part of a process described as being performed manually may also be performed automatically by known methods. In addition, the processing procedures, specific names, and information including various kinds of data and parameters illustrated in the above-described document and drawings may be arbitrarily changed unless otherwise specified. For example, various kinds of information illustrated in each of the drawings are not limited to the information illustrated in the drawings.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions. For example, in the first to the third embodiments as described above, at least a part of the output control process that is explained as being mainly performed by the on-vehicle apparatus 100 according to one embodiment may be performed by the server apparatus 200.

Moreover, the embodiments as described above may be combined appropriately as long as the processing contents do not conflict with each other.

### Conclusion

While some embodiments of the present application have been described in detail above based on the drawings, the embodiments are described by way of example, and the present application may be embodied in various different modes with various modifications and improvements based on knowledge of a person skilled in the art, in addition to the embodiments described in the present disclosure.

### Reference Signs List

- 1: system
- 100: on-vehicle apparatus
- 120: storage unit
- 121: map information storage unit
- 122: output determination table
- 123: content information storage unit
- 131: information alignment engine
- 132: acquisition unit
- 100a: on-vehicle apparatus
- 133a: output control unit
- 100b: on-vehicle apparatus
- 133b: output control unit
- 134b: identification unit
- 135b: updating unit
- 100c: on-vehicle apparatus
- 133c: output control unit
- 136c: living sphere information acquisition unit
- 137c: determination unit

## Claims

1. An information processing apparatus comprising:
an acquisition unit that acquirers content information to be output in a moving object; and
an output control unit that outputs the content information when a type of the content information meets an output condition that corresponds to a current situation of a passenger in the moving object, wherein
when the output control unit does not output the content information because the output condition is not met, the output control unit outputs call information for obtaining a permission for output of the content information from the passenger of the moving object in an allowable range in which output of the content information is allowed.

2. The information processing apparatus according to claim 1, wherein when a tolerance value that is left until an allowable limit that is a limit value of the allowable range is equal to or larger than a first threshold, the output control unit does not output the call information, and re-determines whether or not the output condition is met.

3. The information processing apparatus according to claim 2, wherein when the tolerance value becomes smaller than the first threshold in a state in which the output condition is not met, the output control unit outputs the call information.

4. The information processing apparatus according to claim 3, wherein when the passenger does not permit output of the content information in response to the call information, the output control unit does not output the content information, and re-determines whether or not the output condition is met.

5. The information processing apparatus according to claim 4, wherein while the output condition is not met and the passenger does not permit output of the content information in response to the call information, the output control unit outputs the call information at a predetermined timing that corresponds to a decrease of the tolerance value.

6. The information processing apparatus according to claim 5, wherein the output control unit determines whether or not the tolerance value becomes smaller than a second threshold that is smaller than the first threshold, and outputs the call information when the tolerance value becomes smaller than the second threshold.

7. The information processing apparatus according to claim 1, wherein when the output condition is met or when the passenger permits output of the content information in response to the call information, the output control unit determines whether or not the allowable range is met, and outputs the content information when the allowable range is met.

8. The information processing apparatus according to claim 1, wherein when the output condition is met or when the passenger permits output of the content information in response to the call information, the output control unit determines whether or not the allowable range is met, and when the allowable range is not met, the output control unit outputs the content information while adding a reason that the content information has not been output in the allowable range to the content information.

9. An information processing method implemented by an information processing apparatus, the information processing method comprising:
an acquisition step of acquiring content information to be output in a moving object; and
an output control step of outputting the content information when a type of the content information meets an output condition that corresponds to a current situation of a passenger in the moving object, wherein
the output control step includes outputting, when the content information is not output because the output condition is not met, call information for obtaining a permission for output of the content information from the passenger of the moving object in an allowable range in which output of the content information is allowed.

10. An information processing program executed by an information processing apparatus, the information processing program comprising:
an acquisition step of acquiring content information to be output in a moving object; and
an output control step of outputting the content information when a type of the content information meets an output condition that corresponds to a current situation of a passenger in the moving object, wherein
the output control step includes outputting, when the content information is not output because the output condition is not met, call information for obtaining a permission for output of the content information from the passenger of the moving object in an allowable range in which output of the content information is allowed.
